Europäisches Patentamt

European Patent Office

Office européen des brevets

(19)

(11) Publication number: **0 257 998**
**A2**

## (12) EUROPEAN PATENT APPLICATION

(21) Application number: **87307392.8**

(22) Date of filing: **21.08.87**

(51) Int. Cl.⁴: **B 32 B 31/24**

(30) Priority: **22.08.86 GB 8620483**

(43) Date of publication of application:
**02.03.88 Bulletin 88/09**

(84) Designated Contracting States:
**AT BE CH DE ES FR GB IT LI NL SE**

(71) Applicant: **SCIMAT LIMITED**
**Lennox House Spa Road**
**Gloucester (GB)**

(72) Inventor: **Singleton, Raymond William**
**The Nook Down Ampney**
**Cirencester Gloucestershire (GB)**

**Karpinski, Thomas**
**82 Croft Road**
**Swindon Wiltshire (GB)**

**Smith, Iain Stephen**
**59 Matley Moor Liden**
**Swindon Wiltshire (GB)**

(74) Representative: **Hall, Robert Leonard et al**
**Raychem Limited Intellectual Property Law Department**
**Swan House 37-39 High Holborn**
**London WC1 (GB)**

(54) **Laminated article.**

(57) A method of making a laminated article which comprises a permeable support member and a sheet of microporous material, the method comprising:

a) laminating the support member with a sheet of material whose composition can be altered to render the material microporous, to cause the support member and the sheet to bond directly together; and

b) altering the composition of the material of the sheet to render the material microporous.

Fig. 3A.

Fig. 3B.

Fig. 3C.

## Description

## Laminated Article

This invention relates to a method of making a laminated article comprising a support member, such as a fabric, and a sheet of microporous material.

The physical properties of a support member can be altered by the presence of a sheet of microporous material which is attached to the member. For example, a sheet of microporous material can alter the transport characteristics through a permeable support member of fluids such as finely particulate solids, liquids and gases.

Support members such as fabrics may be rendered waterproof by attachment thereto of a layer of material that is impervious to moisture. It has been found that waterproof properties can be provided advantageously by a sheet of microporous hydrophobic material since the resulting fabric can be both waterproof and breathable. The breathable characteristics can allow water vapour but not liquid water to pass through the fabric, thus reducing condensation.

A known method of making a breathable waterproof fabric involves the use of adhesive in a dot pattern to attach a sheet of hydrophobic material which has already been made microporous, such as for example microporous polytetrafluoroethylene made by the method disclosed in US-3953566, to a fabric. However, the dots of adhesive block a proportion of the pores of the microporous material, and therefore reduce the ability of the microporous material to pass fluids such as water vapour. Furthermore, the physical properties (such as flexibility and bond strength) of the adhesive in extreme conditions (such as extremes of temperature) can limit the range of conditions in which an article, bonded together by adhesive, can perform satisfactorily.

The present invention provides a method of making a laminated article having a microporous sheet bonded to a support member without the use of an adhesive.

Accordingly, the invention provides a method of making a laminated article which comprises a permeable support member and a sheet of microporous material, the method comprising:

a) laminating the support member and a sheet of material whose composition can be altered to render the material microporous, to cause the support member and the sheet to bond directly together; and

b) altering the composition of the material of the sheet to render the material microporous.

The method provided by the invention enables a support member and a sheet of microporous material to be bonded directly together, that is to say, independently of any adhesive which would tend to reduce the porosity of the microporous material. This can enable a better controlled and more even porosity to be obtained in the finished laminated article. Furthermore, the absence of adhesive allows laminated articles to be made whose physical properties in extreme conditions, for example at extremes of temperature, are not limited by the properties of an adhesive layer. For example, articles made by the present method may be used at low temperatures without problems of poor flexibility caused by the low temperature characteristics of an adhesive layer.

The absence of adhesive also allows the laminated article to be used in media (such as solvents), and in contact with materials, which might otherwise react with an adhesive layer, weakening the adhesive bond between the support member and the sheet of microporous material.

The support member used in the present method is permeable, at least in the finished article, so that the micro porous material can act as a barrier to passage of certain fluids which are able to pass through the support member. Generally, the permeability of the support member towards particular selected fluids, especially towards gases, will be very much greater, that is to say at least two times greater, than the permeability of the sheet of microporous material.

Support members will be selected according to the application to which the article is to be put. In one embodiment, the support member comprises a fabric, for example a woven, knitted, or braided fabric, or it may be a non-woven fabric. Articles in which the support member is a fabric may be used to make protective items such as clothing. For example, when the sheet of microporous material is selected so as to render the support member waterproof, the article may be used to make waterproof clothing and other outdoor items such as tents etc.

In other embodiments, the support member may be provided by other permeable members, such as sheets of paper, cardboard, glass or other fibre mesh etc. Thus the method of the invention may be used to confer waterproof properties on items such as rigid panels which may be used for example in building structures.

The article of the invention may be used for filtration, in particular for microfiltration, for example for use in purification processes. A particularly preferred article for use in filtration applications comprises a non-woven mesh formed from a blend of polyester and polyethylene fibres, and microporous polysulphone material.

The article of the invention may also be used as a separator in an electrochemical device such as an electrochemical cell. For example, a polymeric component such as that disclosed in European Patent Application no. 86305319.5 may be laminated with a support member, and the composition of the material of the component may be altered to render the component microporous. The support will preferably be deformable, and capable of absorbing liquid electrolyte contained in the device. A non-woven mesh of polypropylene is a preferred form of support member. Lamination of a separator with a support member facilitates assembly of an electrochemical device since the relatively thin and fragile sheet of separator material is reinforced by the support member. Furthermore, a deformable absorbent support member can improve electrolyte contact between the separator and the electrodes.

When the support member is a fabric, it may comprise cotton, polyolefin, polyester, nylon or other fibres or blends thereof.

Items such as rainproof garments, footwear and tents, which comprise a laminated article made by the present method, also form part of this invention.

The method of the present invention involves laminating a support member with a previously formed sheet of material, in contrast to certain known techniques in which a sheet of material is solvent cast directly onto a support member. The present method therefore enables further steps to be carried out on the sheet before lamination. For example, the thickness of the sheet can be monitored, and altered if desired, for example by physical deformation. The sheet can be treated with a reagant, for example to modify its surface properties or its transmission properties. Furthermore, parameters such as the thickness, transmission characteristics, composition and the existence of defects such as "pin-holes", can be monitored conveniently in the sheet of material prior to lamination with the support member. Manufacture of a discrete sheet of material prior to lamina tion also removes a constraint placed upon the sheet manufacturing process of compatibility of reagents, used during manufacture (such as the solvent in a solvent cast sheet), with the support member. The present method thus allows a solvent cast sheet of microporous material to be laminated with a support member of similar composition.

The sheet of material may be formed by a melt-processing technique such as extrusion, by solvent casting or by any other conventional sheet forming process. Extrusion is preferred since sheets can be formed with an homogeneity which allows the sheet to be made thin, with small pores and high porosity. Extrusion is also a more versatile technique than solvent casting since the constraints on the solubility of the material of the sheet in a solvent, and on the viscosity of the resulting solution or slurry are removed.

The microporous material is preferably polymeric. The selection of the material will generally be determined by the function which the sheet thereof is to perform. For example, when the sheet of microporous material is required to render a support member such as a fabric waterproof, the material will generally be selected to have an advancing water contact angle of more than 90 degrees. The selection of the microporous material will also be determined by the support member to which it is to bond. Examples of materials suitable for use as the microporous material include:

Polymers of ethylenically unsaturated hydrocarbons having from 2 to 12 carbons such as ethylene, propylene, butadiene and 4-tert butyl styrene. Copolymers of these materials are also useful, for example ethylene-vinyl acetate copolymer, ethylene-and propylene copolymers such as EPDM;

Fluoropolymers, in particular ethylenetetrafluoroethylene copolymer (Tefzel®) and polychlorotrifluoroethylene (Halar®);

Condensation polymers, which may be: a) self-condensates of omega-amino-fatty acids and their lactams, such as polymers of caprolactam or 11-amino-undecanoic acid,

b) polyamides of diamines having from 6 to 9 carbons (such as hexamethylene diamine and nonamethylene diamine) and dicarboxylic acids having from 6 to 10 carbons (such as adipic acid, azelaic acid, isophthalic acid and terephthalic acid), in particular poly(hexamethylene adipamide), and

c) polyesters of aryl dicarboxylic acids such as phthalic, terephthalic and isphthalic acids, and glycols having 2 to 6 carbons such as ethylene, butylene and hexylene-glycols, in particular poly(ethylene-terephthalate); and

Polysulphones, for example for filtration.

The strength of the bond between the support member and the sheet of microporous material which can be obtained by the method of this invention wil depend on the materials of the support member and the microporous sheet, and on the conditions during lamination. Without limitation to any particular theory, it is believed that one or both of the following factors may be, involved in forming the bond, their relative importance being determined by the nature of the materials employed in each case:

(i) physical interlocking between the support member and the sheet of microporous material; and

(ii) chemical interaction between the material of the support member and the microporous material.

Factor (i) can be optimised by the use of a support member with a roughened surface. For example a stronger bond between the support member and the sheet of microporous material can be obtained by use of a support member comprising a relatively dense weave of relatively small fibres. A stronger bond may also be obtained by use of staple fibres rather than continuous fibres.

Factor (ii) can be optimised by selection of the materials of the support member and the microporous material which can interact chemically.

It is an advantage of the method provided by this invention that the sheet of material is not microporous during the lamination step, and it is therefore relatively insensitive to harsh physical treatment. This permits a strong bond to be formed between the support member and the sheet of microporous material by selection of appropriate lamination conditions. For example, the pressure and the temperature of lamination may be varied. Preferably the pressure with which the support member and the sheet of material are laminated is at least 2 N.(linear cm)$^{-1}$, more preferably at least 5 N.(linear

cm)$^{-1}$, especially at least 8 N.(linear cm)$^{-1}$. Generally it will be preferred also to carry out the lamination at elevated temperature, which may be a temperature which is higher than the maximum temperature encountered by the article when in use, for example at a temperature not higher than the melting temperature of the material, or at least one of the materials, of the sheet, provided that the components of the article are not degraded at the lamination temperature. For example, a sheet which comprises a blend of polyethylene and polyethylene oxide may be laminated to a support member such as a cotton fabric using pressure rollers heated to approximately 125°C. It is generally preferred to laminate the sheet with the support member at a temperature of at least 80°C, especially at least 100°C.

When the support member comprises a fabric, it is preferred that the thickness of the sheet of material be greater than the diameter of the fibres of the fabric.

After the bond between the support member and the sheet of material has been formed, the composition of the material is altered to render the material microporous. The material can be formulated so as to permit the alteration of its composition either by contact with a fluid, or independently of any fluid contact, for example by heating, by irradiation or by ultrasonic treatment. In either case, the alteration may involve reaction or decomposition of components such as blowing agents present in the material, or reaction of one or more such components with reactants applied to the material. It is advantageous to render the sheet of material microporous by alteration of the composition of the material, rather than by physical deformation (such as stretching), since it allows the pores to be created after lamination to the support member. Furthermore, the risk of forming pinholes through the sheet, which is prevalent in stretched sheets, is reduced. It is particularly preferred that the material comprises a component which is removable so as to alter its composition as aforesaid. The removal of the component may be effected by contacting the material with a fluid, preferably a liquid, in which the component is soluble. The removable component may be inorganic material, for example a metal salt, or organic material or polymeric material, which is capable of being leached out of the composition. Particularly preferred removable components are soluble polymers, the choice being made according to the liquid used for the removal. For convenience, it will generally be preferred to select a component that is soluble in water or another aqueous solvent. When a polymeric component is preferred, polymers such as alkylene oxide homo- or copolymers may be used, polyethylene oxide being particularly preferred. Blends of such compounds with polyethylene may be used to form the sheet of material for lamination with the support member.

The permeability of a sheet of material towards certain fluids is dependent on the size of the pores and on their tortuosity: thus a sheet of material with relatively large but tortuous pores can be less permeable towards a fluid than a sheet of material with small but less tortuous pores, dependent inter alia on the extent of any interaction between the fluid and the material of the sheet. The use of a sheet of material with large but tortuous pores can be advantageous when the sheet is required to provide a selective barrier.

It is preferred to render the sheet of material microporous by altering the composition of the material, particularly by contacting the material with a fluid. By this methid, highly tortuous pores can be produced, compared with pores made by prior art techniques such as stretching.

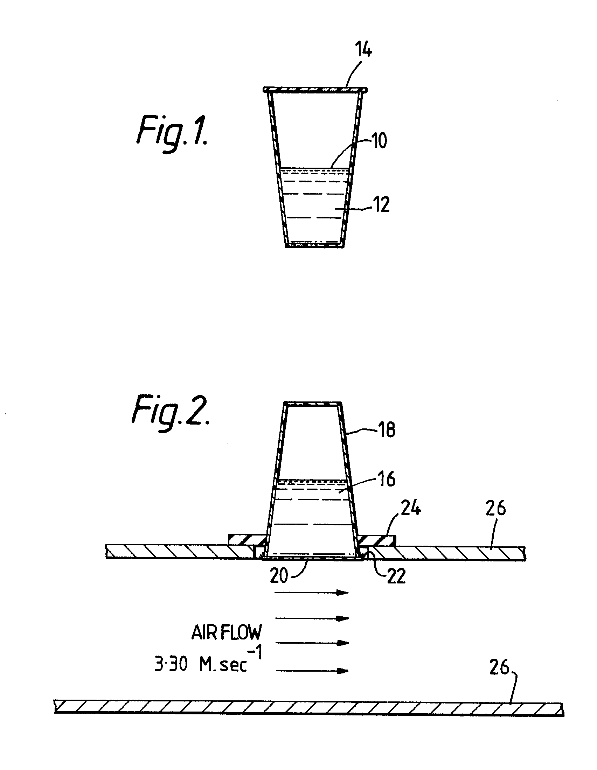

When the material is rendered microporous by removal of a component by dissolution in a liquid, the steps necessary to achieve satisfactory microporosity will depend on the material of the sheet, on the solvent used to dissolve the component, and on the microporosity required of the finished article. When the sheet of microporous material is desired to confer waterproof properties on a support member while allowing passage of water vapour, the porosity will be such that the moisture vapour transmission rate of the sheet of microporous material is at least 1000 g.m$^{-2}$.day$^{-1}$, measured using ASTM-E96-66B, modified as described below with reference to Figures 1 and 2 of the accompanying drawings.

Figure 1 shows the test apparatus for determining the moisture vapour transmission rate (MVTR) by ASTM-E96-66B. This method is not suitable for measuring high rates of moisture vapour transmission because the air gap between the surface 10 of the water 12, and the material 14 to be tested is itself a significant resistance to the transmission of moisture vapour.

To measure high rates of moisture vapour transmission, the test method is modified by elimination of the air gap as shown in Figure 2.

The procedure is as follows. Approximately 80cc of water 16 is placed in a tapered polypropylene cup 18 which is 11.5 cm high with a 6.5 cm diameter mouth. The material 20 to be tested is sealed to the lip of the cup with a silicone adhesive 22. The cup assembly is weighed to the nearest 1/100 gram and an elastic rubber collar 24 is placed on the cup under tension. In an environmental chamber 26, the assembly is suspended upside down through a circular opening in a support place, its position being adjusted by means of the rubber collar so that the mouth of the cup is aligned with the lower surface of the plate. Between this surface and the bottom of the chamber there is an approximately 10.0 cm air space across which air is caused to flow at about 200 m/min. The chamber is held at a temperature of 23°C ± 1°C and a relative humidity of 50% ± 2%. The sample remains in the chamber for three hours and is then removed and weighed again to within 1/100 of a gram. The moisture vapour transmission rate is then expressed in grams of water lost per square meter of sample surface area per 24 hours.

By the method of the present invention, it is possible to make laminated articles having a moisture vapour transmission rate of at least 5kg.m$^{-2}$.day$^{-1}$, especially at least 10kg.m$^{-2}$.day$^{-1}$. Such high values of the MVTR are possible because there is no adhesive present between the support member and the sheet of microporous material, which would tend to block the pores of the microporous material.

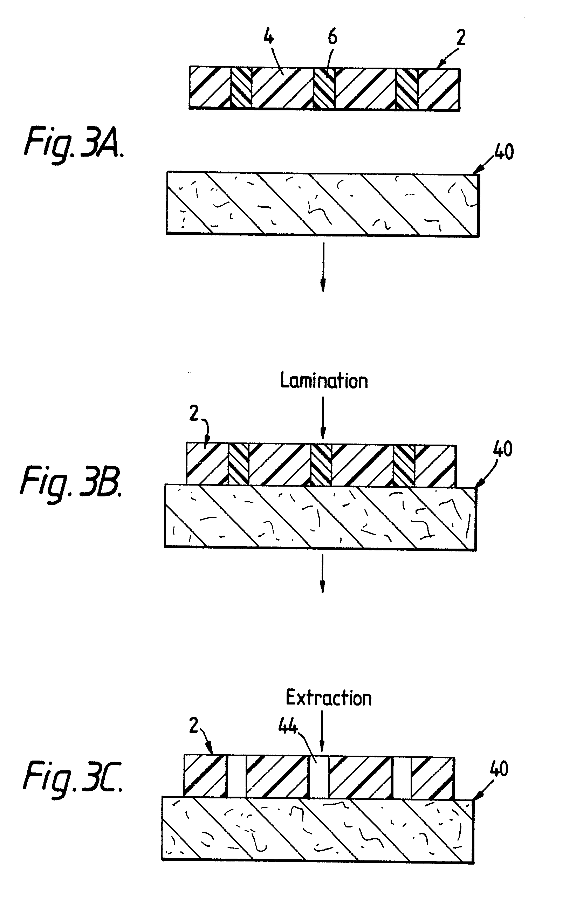

The method of the present invention will now be described by way of example with reference to Figure 3 of the accompanying drawings.

Referring to Figure 3, a sheet 2 of material is capable of being rendered microporous by alteration of its composition. The sheet 2 comprises a first component 4 which is substantially unaffected by the said alteration of composition of the sheet, and a second component 6 which, prior to the said alteration, is present in pores in the first component 4. The sheet 2 preferably comprises a blend of 40 parts polyethylene and 60 parts polyethylene oxide formed into a film by extrusion.

By the method of the invention, a laminate article is formed which comprises a sheet 2 of microporous material and a support member 40, which preferably is a fabric.

The method comprises laminating the sheet 2 of material whose composition can be altered as aforesaid with a support member 40 at elevated temperature under pressure. Subsequently, the composition of the sheet 2 of material is altered to render the sheet microporous. When the second component 6 is soluble, the alteration may involve extraction of that component, to leave pores 44 in the first component.

EXAMPLE:

40 Parts w/w medium density polyethylene (Sclair 8405® from Du Pont) and 60 parts w/w polyethylene oxide (Polyox WSRN 705® from Union Carbide) were compounded using a Baker Perkins twin screw extruder. The compound was then blown into a 100 micron thick film using conventional blown polymer film techniques. The die gap was 0.65 mm and the die temperature 210°C. The blow ratio was 2.1. The film was then reduced in thickness to 50 micron by passing it between 30 cm diameter rolls at a temperature of 85°C. The force exerted by the rolls on the film was 8N.(linear cm)$^{-1}$.

A length of the film was laminated in a continuous process to a 54g.m$^{-2}$ non-waterproofed nylon fabric (Pertex 4®). The lamination process involved sandwiching the polymer film between the fabric layer and a layer of silicon release paper and then passing the layers between 30 cm diameter rolls at a temperature of 130°C. The force exerted by the rolls was 0.84 KG.(linear cm)$^{-1}$. Following removal of the silicon release paper, the laminate was immersed in water to remove by dissolution the polyethylene oxide from the polymer film. After drying a laminate was left consisting of a microporous polyethylene web strongly attached to a fabric backing.

Using a T500 Monsanto tensile tester, the ambient temperature sheer strength between the microporous web and the fabric was determined at an extension rate of 50 mm.min$^{-1}$. In all cases, failure occurred in the microporous web and not between the fabric/web interface despite reducing the interfacial area to as small as possible. Accordingly, the test could only determine that the sheet strength was greater than 45 N.cm$^{-2}$.

The moisture vapour transmission rate (MVTR) of the laminate was determined using the test apparatus described above.

The MVTR value for the laminate was 9.5 kg.m$^{-2}$.day$^{-1}$ while the microporous polyethylene web by itself has a value of 10.1 kg.m$^{-2}$. This demonstrates that the lamination process has no adverse effect on the MVTR of the microporous web.

**Claims**

1. A method of making a laminated article which comprises a permeable support member and a sheet of microporous material, the method comprising:

    a) laminating the support member with a sheet of material whose composition can be altered to render the material microporous, to cause the support member and the sheet to bond directly together; and

    b) altering the composition of the material of the sheet to render the material microporous.

2. A method as claimed in claim 1, in which the support member is a fabric.

3. A method as claimed in claim 2, in which the fabric is woven.

4. A method as claimed in any of the preceding claims, in which the material of the said sheet is polymeric.

5. A method as claimed in claim 4, in which, at least after alteration of its composition, the material of the said sheet has an advancing water contact angle of more than 90 degrees.

6. A method as claimed in claim 5, in which the material of the said sheet comprises polyethylene.

7. A method as claimed in any one of the preceding claims, in which the sheet of material is formed by a melt-processing technique.

8. A method as claimed in any one of the preceding claims, in which the material of the said sheet is rendered microporous by removal of a component therefrom.

9. A method as claimed in claim 8, in which the removable component is soluble in an aqueous solvent.

10. A method as claimed in claim 9, in which the removable component is a homo- or copolymer of an alkylene oxide.

11. A method as claimed in claim 10, in which the removable component comprises polyethylene oxide.

12. A method as claimed in any one of the preceding claims, in which the support member and the layer of material are laminated with a pressure of at least 2, preferably at least 5N/linear cm.

13. A method as claimed in any one of the preceding claims, in which the support member and the layer of material are laminated at an elevated temperature.

0257998

Fig.1.

Fig.2.

AIR FLOW

3·30 M.sec$^{-1}$

0257998

Fig. 3A.

Lamination

Fig. 3B.

Extraction

Fig. 3C.